(19) Europäisches Patentamt, European Patent Office, Office européen des brevets

(11) **EP 3 795 758 A1**

(12) **EUROPÄISCHE PATENTANMELDUNG**

(43) Veröffentlichungstag:
**24.03.2021 Patentblatt 2021/12**

(51) Int Cl.:
*E03B 7/00* (2006.01)    *G01M 3/28* (2006.01)

(21) Anmeldenummer: **20189120.7**

(22) Anmeldetag: **03.08.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **17.09.2019 DE 102019124985**

(71) Anmelder: **Livisi GmbH**
**45128 Essen (DE)**

(72) Erfinder: **Hoffmann, Wolfgang**
**44289 Dortmund (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(54) **HAUSAUTOMATIONSSYSTEM**

(57)    Die Anmeldung betrifft ein Hausautomationssystem (100), umfassend mindestens eine Hausautomationssteuerung (2), wobei die Hausautomationssteuerung (2) umfasst mindestens ein erstes Kommunikationsmodul (6), eingerichtet zum Kommunizieren über ein Hauskommunikationsnetz (92), mindestens ein zweites Kommunikationsmodul (8), eingerichtet zum Kommunizieren über ein Fernkommunikationsnetz (94), und mindestens ein Verarbeitungsmodul (4), eingerichtet zum Verarbeiten von empfangenen Daten; eine Eingangswassermesseinrichtung (20), umfassend mindestens ein Messmodul (24), eingerichtet zum Messen der in ein Hauswasserversorgungsnetz (3) eingespeisten Wassermenge, mindestens ein Kommunikationsmodul (22), eingerichtet zum Übertragen der gemessenen eingespeisten Wassermenge über das Hauskommunikationsnetz (92) an das erste Kommunikationsmodul (6) der Hausautomationssteuerung (2); eine Mehrzahl von Ausgangswassermesseinrichtungen (40), wobei jedem Wasserauslass (28, 34) des Hauswasserversorgungsnetzes (3) jeweils eine Ausgangswassermesseinrichtung (40) zugeordnet ist, wobei jede Ausgangswassermesseinrichtung (40) umfasst mindestens ein erstes Messmodul (44), eingerichtet zum Messen der dem Hauswasserversorgungsnetz (3) durch den zugeordneten Wasserauslass (28, 34) entnommenen Wassermenge, mindestens ein zweites Messmodul (46), eingerichtet zum Messen des Wasserdrucks an dem zugeordneten Wasserauslass (28, 34), und mindestens ein Kommunikationsmodul (42), eingerichtet zum Übertragen der gemessenen entnommenen Wassermenge und des gemessenen Wasserdrucks über das Hauskommunikationsnetz (92) an das erste Kommunikationsmodul (6) der Hausautomationssteuerung (2); wobei das Verarbeitungsmodul (4) der Hausautomationssteuerung (2) zumindest eingerichtet ist zum Detektieren einer Störung des Hauswasserversorgungsnetz (3) durch Auswerten zumindest der empfangenen eingespeisten Wassermenge, der empfangenen entnommenen Wassermengen und der erfassten Wasserdrücke, und wobei das zweite Kommunikationsmodul (8) der Hausautomationssteuerung (2) eingerichtet ist zum Aussenden einer Push-Störungsnachricht über das Fernkommunikationsnetz (94) bei Detektion einer Störung des Hauswasserversorgungsnetzes (3).

Fig.1

**Beschreibung**

Die Anmeldung betrifft ein Hausautomationssystem zum Überwachen eines Hauswasserversorgungsnetzes und ein Verfahren zum Betreiben eines Hauswasserversorgungsnetzes, insbesondere ein Überwachungsverfahren zum Überwachen eines Hauswasserversorgungsnetzes.

Gebäude und ähnliche Einrichtung verfügen in der Regel über mindestens ein Hauswasserversorgungsnetz. Ein Hauswasserversorgungsnetz kann insbesondere als Rohrleitungsnetz gebildet sein. Das Hauswasserversorgungsnetz ist eingerichtet zum Transportieren von Wasser zu thermischen Verbrauchern (z.B. ein Heizkörper) und/oder Wasserauslässen (z.B. Wasserhahn, Waschmaschine etc.). Ein Hauswasserversorgungsnetz ist in der Regel über eine Zuleitung an ein öffentliches Wasserversorgungsnetz oder eine andere Wasserquelle angeschlossen. Anders ausgedrückt wird Wasser (nur) über die Zuleitung, die ein Ventil zur Zuflusssteuerung aufweisen kann, in das Hauswasserversorgungsnetz eingespeist.

Problematisch an einem Hauswasserversorgungsnetz eines Gebäudes ist, dass eine Störung des Hauswasserversorgungsnetzes in Form einer Beschädigung von zumindest einem Teil des Hauswasserversorgungsnetzes bzw. des Rohrleitungsnetzes auftreten kann. Beispielhafte Störungs- bzw. Beschädigungsarten sind Rohrbrüche und Mikro-Leckagen. Die Ursache eines Rohrbruchs kann vielfältig sein. Beispielsweise kann die Ursache Frost, ein Material- oder Herstellungsfehler von einem Wasserleitungsrohr, ein Druckstoß, starke Korrosion, Materialermüdung und/oder unvorsichtige Bauarbeiten (z. B. bei unbekannter Lage der Rohrleitungen) sein. Eine Mikro-Leckage kann einem Rohrbruch vorausgehen oder ein beschädigter Wasserauslass, wie ein tropfender Wasserhahn oder dergleichen sein.

Bei bekannten Systemen besteht das Problem, dass eine Störung häufig zu spät detektiert wird. Zudem ist häufig bei den bekannten Systemen bis zu einer tatsächlichen Detektion einer Störung des Hauswasserversorgungsnetzes schon eine erhebliche Menge an Wasser ausgetreten, die zu erheblichen weiteren Schäden führen kann, wenn keine unmittelbaren weiteren Maßnahmen ergriffen werden.

Daher liegt der Anmeldung die Aufgabe zugrunde, ein System insbesondere zum Überwachen eines Hauswasserversorgungsnetzes eines Gebäudes bereitzustellen, welches eine verbesserte Überwachung des Hauswasserversorgungsnetzes ermöglicht und insbesondere die Schäden aufgrund einer Beschädigung des Hauswasserversorgungsnetzes zumindest reduziert.

Diese Aufgabe wird gemäß einem ersten Aspekt der Anmeldung gelöst durch ein Hausautomationssystem nach Anspruch 1. Das Hausautomationssystem umfasst mindestens eine Hausautomationssteuerung. Die Hausautomationssteuerung umfasst mindestens ein erstes Kommunikationsmodul, eingerichtet zum Kommunizieren über ein Hauskommunikationsnetz. Die Hausautomationssteuerung umfasst mindestens ein zweites Kommunikationsmodul, eingerichtet zum Kommunizieren über ein Fernkommunikationsnetz. Die Hausautomationssteuerung umfasst mindestens ein Verarbeitungsmodul, eingerichtet zum Verarbeiten von (durch die Hausautomationssteuerung) empfangenen Daten. Das Hausautomationssystem umfasst eine Eingangswassermesseinrichtung. Die Eingangswassermesseinrichtung umfasst mindestens ein Messmodul, eingerichtet zum Messen der in ein Hauswasserversorgungsnetz eingespeisten Wassermenge. Die Eingangswassermesseinrichtung umfasst mindestens ein Kommunikationsmodul, eingerichtet zum Übertragen der gemessenen eingespeisten Wassermenge über das Hauskommunikationsnetz an das erste Kommunikationsmodul der Hausautomationssteuerung. Das Hausautomationssystem umfasst eine Mehrzahl von Ausgangswassermesseinrichtungen, wobei jedem Wasserauslass des Hauswasserversorgungsnetzes jeweils eine Ausgangswassermesseinrichtung zugeordnet ist. Jede Ausgangswassermesseinrichtung umfasst mindestens ein erstes Messmodul, eingerichtet zum Messen der dem Hauswasserversorgungsnetz durch den zugeordneten Wasserauslass entnommenen Wassermenge. Jede Ausgangswassermesseinrichtung umfasst mindestens ein zweites Messmodul, eingerichtet zum Messen des Wasserdrucks an dem zugeordneten Wasserauslass. Jede Ausgangswassermesseinrichtung umfasst mindestens ein Kommunikationsmodul, eingerichtet zum Übertragen der gemessenen entnommenen Wassermenge und des gemessenen Wasserdrucks über das Hauskommunikationsnetz an das erste Kommunikationsmodul der Hausautomationssteuerung. Das Verarbeitungsmodul der Hausautomationssteuerung ist zumindest eingerichtet zum Detektieren einer Störung des Hauswasserversorgungsnetzes durch Auswerten zumindest der empfangenen eingespeisten Wassermenge, der empfangenen entnommenen Wassermengen und der erfassten Wasserdrücke. Das zweite Kommunikationsmodul der Hausautomationssteuerung ist eingerichtet zum Aussenden einer Push-Störungsnachricht über das Fernkommunikationsnetz bei Detektion einer Störung des Hauswasserversorgungsnetzes.

Indem im Gegensatz zum Stand der Technik ein Hausautomationssystem mit einer (lokalen) Hausautomationssteuerung bereitgestellt wird und sowohl eine Eingangswassermesseinrichtung vorgesehen ist, um die (gesamte) in das zu überwachende Hauswasserversorgungsnetz eingespeiste Wassermenge zu messen, und jedem Wasserauslass eine Ausgangswassermesseinrichtung zugeordnet ist, die jeweils die an dem zugeordneten Wasserauslass entnommene Wassermenge misst und den Wasserdruck an dem zugeordneten Wasserauslass misst, kann durch die Hausautomationssteuerung durch eine Auswertung dieser Sensordaten zeitnah eine Störung des Hauswasserversorgungsnetzes detektiert werden. Durch (unmittelbares) Aussenden einer Push-Störungsnachricht über das Fernkommunikationsnetz kann unmittelbar ein Einleiten von Maßnahmen zur Beseitigung der Störung bewirkt werden.

Das Hausautomationssystem wird in einem Gebäude oder einem Teil eines Gebäudes (z.B. Wohnung, bestimmter Büroabschnitt etc.) verwendet. Das Gebäude kann ein Einfamilienhaus, ein Mehrfamilienhaus, ein Bürogebäude, ein Fabrikgebäude etc. sein.

Anmeldungsgemäß weist das Hausautomationssystem (genau) eine Hausautomationssteuerung auf. Die Hausautomationssteuerung ist insbesondere eine lokale, in dem Gebäude installierte Recheneinrichtung. Die Hausautomationssteuerung ist zur Steuerung eines in dem Gebäude installierten lokalen Hausautomationssystems, umfassend eine Mehrzahl von (elektrischen) Verbrauchern (z.B. Beleuchtungselemente) und/oder ansteuerbaren Aktoren (z.B. Aktor einer Verschattungseinrichtung, Heizungsventil eines Heizkörpers etc.) eingerichtet, beispielsweise basierend auf Nutzervorgaben (z.B. Aktivieren/Deaktivieren einer Beleuchtung stets um x:xx Uhr; Aktivieren/Deaktivieren einer Verschattungsanlage bei Detektion einer bestimmten Sonnenstrahlung etc.).

Die Hausautomationssteuerung umfasst allgemein ein Verarbeitungsmodul, um insbesondere durch die Hausautomationssteuerung empfangene Daten zu verarbeiten. Ferner umfasst die Hausautomationssteuerung zumindest zwei Kommunikationsmodule, die unterschiedliche Technologien zur Kommunikation nutzen. Ein erstes Kommunikationsmodul der Hausautomationssteuerung ist insbesondere ein Nahfeld-Kommunikationsmodul (z.B. ein WLAN- oder Bluetooth-Nahfeld-Kommunikationsmodul), eingerichtet zum Kommunizieren mit weiteren Einrichtungen des Hausautomationssystems (z.B. die vorgenannten Verbrauchern und/oder Aktoren) über ein lokales (in der Reichweite beschränktes) Hauskommunikationsnetz.

Das zweite Kommunikationsmodul ist insbesondere ein Fernkommunikationsmodul (z.B. ein Mobilfunkmodul oder ein Router), eingerichtet zum Kommunizieren mit einem zentralen und entfernt angeordneten Backendsystem und/oder mindestens einem (mobilen) Nutzerendgerät (direkt oder via dem Backendsystem). Anmeldungsgemäß ist vorgesehen, die (ohnehin vorgesehene) Hausautomationssteuerung zur Überwachung des Hauswasserversorgungsnetzes des Gebäudes einzusetzen. Ein Gebäude kann ein Hauswasserversorgungsnetzes oder mehrere, separate Hauswasserversorgungsnetze umfassen. Ein Hauswasserversorgungsnetz zeichnet sich dadurch aus, dass es von einer externen Wasserquelle (insbesondere ein öffentliches Wasserversorgungssystem über eine (einzelne) Zuleitung bzw. einen (einzelnen) (Eingangs-) Anschluss mit Wasser gespeist wird und insbesondere dieses Wasser über Rohrleitungen des Hauswasserversorgungsnetzes innerhalb und/oder außerhalb des Gebäudes an eine Vielzahl von Wasserauslässen bzw. Wasserentnahmestelle verteilt.

An der genannten Zuleitung ist insbesondere eine Eingangswassermesseinrichtung angeordnet. Insbesondere kann der (Eingangs-) Anschluss bzw. die Zuleitung des Hauswasserversorgungsnetzes die Eingangswassermesseinrichtung umfassen.

Die Eingangswassermesseinrichtung umfasst ein Messmodul, eingerichtet zum (vorzugsweise kontinuierlichen) Messen der in das Hauswasserversorgungsnetz eingespeisten gesamten Wassermenge. Insbesondere kann das Messmodul ein Durchflusssensor umfassen oder sein. Ein Durchflusssensor ist eingerichtet, den Durchfluss des Wassers durch ein (Zuleitungs-)Rohr zu messen. Beispielsweise kann der Volumendurchfluss erfasst werden. Dazu wird die Fließgeschwindigkeit des Wassers gemessen und dann der Durchfluss über die Formel Volumendurchfluss = Rohrquerschnittsfläche * Geschwindigkeit bestimmt. Beispielhafte und nicht abschließende Durchflusssensoren, die eingesetzt werden können, sind Flügelradsensoren oder Ultraschallsensoren.

Ferner weist die Eingangswassermesseinrichtung ein mit dem Messmodul kommunikativ verbundenes Kommunikationsmodul auf. Das Kommunikationsmodul der Eingangswassermesseinrichtung ist insbesondere ein Nahfeldkommunikationsmodul (z.B. WLAN- oder Bluetooth-Nahfeldkommunikationsmodul), eingerichtet zum Kommunizieren mit dem ersten Kommunikationsmodul der Hausautomationssteuerung über das (drahtlose und/oder drahtgebundene) Hauskommunikationsnetz.

Das Kommunikationsmodul der Eingangswassermesseinrichtung kann (nahezu) kontinuierlich (z.B. alle x s) die gemessenen Wassermengenwerte an das erste Kommunikationsmodul der Hausautomationssteuerung übertragen.

Es versteht sich, dass für den Fall, dass zwei oder mehr Zuleitungen bzw. Anschlüsse vorgesehen sind, jeder der Zuleitungen bzw. Anschlüsse eine jeweilige Eingangswassermesseinrichtung zugeordnet ist. Insbesondere ist anmeldungsgemäß vorgesehen, dass durch die mindestens eine Eingangswassermesseinrichtung stets die gesamte eingespeiste Wassermenge (kontinuierlich) gemessen werden kann.

Anmeldungsgemäß ist ferner vorgesehen, dass jedem Wasserauslass eine (eigene) Ausgangswassermesseinrichtung zugeordnet ist. Beispielsweise kann eine Vielzahl an Wasserauslässen innerhalb und/oder außerhalb des Gebäudes vorgesehen sein, an denen Wasser aus dem Hauswasserversorgungsnetz entnommen werden kann. Ein Wasserauslass kann ein einzelner Wasserauslass oder eine Gruppe von unmittelbar benachbart angeordneten Sub-Wasserauslässen sein, wie zwei oder mehr Wasserauslässe einer Duschvorrichtung, Badewannenvorrichtung etc. Beispielsweise kann ein Wasserauslass ein Wasserhahn zum Befüllen eines Wasserbeckens, wie ein Schwimmbad, Whirlpool, Badewanne, oder zum Anschließen einer Bewässerungsanordnung z.B. für einen Garten etc. sein.

Jedem Wasserauslass des Hauswasserversorgungsnetzes ist systemweit eindeutig eine Ausgangswassermesseinrichtung zugeordnet. Unter Zuordnung ist insbesondere zu verstehen, dass die Ausgangswassermesseinrichtung den Wasserfluss nur durch den zugeordneten Wasserauslass erfasst. Besonders bevorzugt kann eine Ausgangswassermesseinrichtung in dem Wasserauslass integriert sein, wie einem Gehäuse eines Wasserhahns, einer Armatur etc..

Die Ausgangswassereinrichtung umfasst mindestens ein erstes Messmodul, eingerichtet zum (vorzugsweise kontinuierlichen) Messen der aus dem Hauswasserversorgungsnetz über den zugeordneten Wasserauslass entnommenen Wassermenge. Insbesondere kann das Messmodul ein (zuvor beschriebener) Durchflusssensor umfassen oder sein.

Neben dem ersten Messmodul weist die anmeldungsgemäße Ausgangswassermesseinrichtung mindestens ein zweites Messmodul auf. Das zweite Messmodul ist eingerichtet zum (kontinuierlichen) Messen des Wasserdrucks bzw. Leitungsdruck, unter dem das Wasser an dem Wasserauslass (insbesondere in Strömungsrichtung gesehen vor einem Ventil des Wasserauslasses) steht. Das zweite Messmodul kann insbesondere ein Manometer sein.

Darüber hinaus weist die Ausgangswassermesseinrichtung ein mit dem ersten und zweiten Messmodul kommunikativ verbundenes Kommunikationsmodul auf. Das Kommunikationsmodul der Ausgangswassermesseinrichtung ist insbesondere ein Nahfeld-Kommunikationsmodul (z.B. WLAN- oder Bluetooth-Nahfeldkommunikationsmodul), eingerichtet zum Kommunizieren mit dem ersten Kommunikationsmodul der Hausautomationssteuerung über das Hauskommunikationsnetz. Das Kommunikationsmodul der Ausgangswassermesseinrichtung kann (nahezu) kontinuierlich (z.B. alle x s) die gemessenen Wassermengenwerte und/oder Wasserdruckwerte an das erste Kommunikationsmodul der Hausautomationssteuerung übertragen.

Sämtliche von dem ersten Kommunikationsmodul der Hausautomationssteuerung empfangenen Sensordaten werden dem Verarbeitungsmodul (zumindest nahezu kontinuierlich) der Hausautomationssteuerung zur Verfügung gestellt, um eine (zumindest nahezu kontinuierliche) Auswertung der empfangenen Sensordaten durch das Verarbeitungsmodul zu ermöglichen. Basierend auf den Daten wird in der Auswertung durch das Verarbeitungsmodul bestimmt, ob eine Störung vorliegt (oder nicht). Liegt keine Störung vor, wird die Auswertung (kontinuierlich) fortgesetzt.

Wird eine Störung des Hauswasserversorgungsnetzes detektiert, beispielsweise bei Detektion einer Abweichung von den erhaltenen Sensordaten von einem Vergleichskriterium, wird (vorzugsweise unmittelbar) durch das zweite Kommunikationsmodul der Hausautomationssteuerung eine Push-Störungsnachricht über das Fernkommunikationsnetz ausgesendet. Insbesondere kann eine Aussendung durch das Verarbeitungsmodul bewirkt werden.

Indem eine Push-Störungsnachricht generiert und ausgesendet wird, kann sichergestellt werden, dass die Störung auf einem Nutzerendgerät dem Nutzer unmittelbar angezeigt wird. Dann können zeitnah Maßnahmen zur Beseitigung eingeleitet werden.

Insbesondere kann die Push-Störungsnachricht Instruktionen umfassen, die bei einem Empfang durch ein Nutzerendgerät eine graphische Anzeige auf einem Display des Nutzerendgeräts und vorzugsweise zusätzlich eine akustische und/oder haptische Alarmgenerierung auf dem Nutzerendgerät bewirkt.

Beispielhafte und nicht abschließende Beispiele von Nutzerendgeräten sind Smartphone, Laptops, Tablet-Computer, Smart-Watches, Smart-Glasses, Arbeitsplatzrechner etc.

Gemäß einer ersten Ausführungsform des anmeldungsgemäßen Hausautomationssystems (nachfolgend auch nur mit System bezeichnet) kann die Eingangswassermesseinrichtung mindestens ein Ventilsteuermodul umfassen, eingerichtet zum Ansteuern eines Ventils in der Zuleitung (bzw. dem Eingangsanschluss) des Hauswasserversorgungsnetz. Das erste Kommunikationsmodul der Hausautomationssteuerung kann eingerichtet sein zum Aussenden eines Ventilansteuersignals an das Kommunikationsmodul der Eingangswassermesseinrichtung über das Hauskommunikationsnetz bei Detektion einer Störung des Hauswasserversorgungsnetzes. Das Ventilsteuermodul kann bei einem Empfang des Ventilansteuersignals das Ventil entsprechend dem empfangenen Ventilansteuersignal ansteuern, insbesondere eine Schließung des Ventils bewirken.

Indem bei Detektion einer Störung des Hauswasserversorgungsnetz, die insbesondere ein Indiz für einen Rohrbruch oder eine Mikroleckage ist, vorzugsweise unmittelbar die Einspeisung von Wasser in das Hauswasserversorgungsnetz blockiert wird, können die Schäden durch die detektierte Störung zumindest reduziert werden. Eine Zuleitung bzw. ein Eingangsanschluss eines Hauswasserversorgungsnetzes verfügt in der Regel über ein (Haupt-) Ventil bzw. Absperrmittel, um den Zufluss in das Hauswasserversorgungsnetz zu steuern. Das Hauptventil, vorzugsweise ein elektromechanisches Ventil, kann zumindest zwischen zwei Ventilpositionen bzw. zuständen (geöffnet und geschlossen) verfahren werden. Es versteht sich, dass Zwischenpositionen vorgesehen sein können.

Insbesondere kann ein Aktor des Hauptventils (beispielsweise ein Elektromotor) durch das Ventilsteuermodul angesteuert werden, um ein Verfahren des Ventils von einer Ventilposition in eine andere Ventilposition (und umgekehrt) zu bewirken. Ein Ventilansteuersignal kann beispielsweise eine Instruktion zum Öffnen oder Schließen enthalten. Basierend auf der enthaltenen Instruktion kann das Ventilsteuermodul den Aktor des Ventils ansteuern. Es versteht sich, dass andere Arten von Ventilen eingesetzt werden können.

Gemäß einer bevorzugten Ausführungsform des anmeldungsgemäßen Systems kann das Verarbeitungsmodul der Hausautomationssteuerung eingerichtet sein zum Detektieren der Störung des Hauswasserversorgungsnetz durch ein Vergleichen der augenblicklich in das Hauswasserversorgungsnetz eingespeisten Wassermenge und der durch sämtliche Wasserauslässe augenblicklich entnommenen Wassermenge. Insbesondere kann in einer (kontinuierlich ausführbaren) Vergleichsoperation die zu gleichen Zeitpunkten entnommene (Gesamt-) Wassermenge mit der eingespeisten (Gesamt-) Wassermenge verglichen werden. Beispielsweise kann folgende Regel (a) durch das Verarbeitungsmodul abgearbeitet werden:

$$V_{diff} = V_{eing} - \sum V_{entn,i},$$

wobei $V_{eing}$ die erfasste eingespeiste Wassermenge, $V_{entn,i}$ die jeweils erfassten entnommenen Wassermenge und $V_{diff}$ die berechnete Wassermengendifferenz ist.

Wie bereits beschrieben wurde, können die Werte zeitabhängig sein, wobei bei der Berechnung stets Werte gleicher Zeiten verwendet werden.

Eine Störung des Hauswasserversorgungsnetzes wird insbesondere detektiert, wenn durch das Vergleichen eine Differenz $V_{diff}$ bestimmt wird, die größer ist als ein vorgegebener Grenzwert $V_{diff,\ grenz}$. Bei einer bevorzugten Ausführungsform kann der vorgegebene Grenzwert $V_{diff,\ grenz}$ null sein. In diesem Fall kann in sicherer Weise auch eine Mikroleckage detektiert werden. Wenn mit Messfehlern aufgrund der eingesetzten Bauteile zu rechnen ist, kann auch ein Grenzwert $V_{diff,\ grenz}$ ungleich null vorgegeben werden.

Gemäß einer besonders bevorzugten Ausführungsform des anmeldungsgemäßen Systems kann das Verarbeitungsmodul der Hausautomationssteuerung eingerichtet sein zum Bestimmen einer Störungsposition der detektierten Störung des Hauswasserversorgungsnetz in dem Hauswasserversorgungsnetz, indem der jeweilige augenblickliche Wasserdruckabfall an den Wasserauslässen, an denen augenblicklich keine Wassermenge entnommen wird, ausgewertet wird. Insbesondere ist erkannt worden, dass nicht nur das Vorliegen einer Störung anmeldungsgemäß detektiert werden kann, sondern auch die Störungsposition dieser Störung, wie ein bestimmter Raum eines bestimmten Gebäudes, ein bestimmter Wasserauslass etc.

Vorzugsweise kann jede Ausgangswassermesseinrichtungen systemweit eine eindeutige Kennung aufweisen, die in dem System registriert ist. Mit der Kennung kann der jeweils zugeordnete Wasserauslass, also ein einzelner Wasserauslass oder eine Gruppe von Sub-Wasserauslässen, eindeutig identifiziert werden. Vorzugsweise kann eine Zuordnungstabelle (oder dergleichen) gespeichert sein, vorzugsweise in der Hausautomationssteuerung (und/oder in einem Backendsystem), in der jeder Kennung eine bestimmte Ortsinformation, wie ein bestimmter Raum (z.B. Raum 1.1, Badezimmer oben, Küche in Wohnung x etc.), zugeordnet sein kann.

Die jeweiligen Kommunikationsmodule der Ausgangswassermesseinrichtungen können insbesondere eingerichtet sein, die erfassten Sensordaten jeweils zusammen mit der Kennung (z.B. ein Code, eine Kommunikationsadresse etc.) der jeweiligen Ausgangswassermesseinrichtung auszusenden. Dann kann eine Zuordnung von Sensordaten zu einem bestimmten Ort, wie einem bestimmten Raum, erfolgen.

Insbesondere kann aus einem Druckabfall, der durch Auswerten von gemessenen zeitabhängigen Wasserdruckwerten bestimmt werden kann, auf eine Störungsposition geschlossen werden. Wenn ein Druckabfall an einem Wasserauslass detektiert wird, aus dem augenblicklich kein Wasser entnommen wird, dann ist dies ein Indiz dafür (wenn gleichzeitig eine Störung detektiert wird, beispielsweise durch Auswerten der Regel (a)), dass sich eine Störung des Hauswasserversorgungsnetz in der Nähe von diesem Wasserauslass befindet, insbesondere in dem Raum, der dem Wasserauslass bzw. der Ausgangswassermesseinrichtung des Wasserauslasses zugeordnet ist. Indem eine Störungsposition detektiert wird, kann die Störung, wie ein Wasserrohrbruch oder eine Mikroleckage, besonders zeitnah behoben werden. Eine aufwendige Suche nach der Störungsposition kann zumindest reduziert werden.

Gemäß einer besonders bevorzugten Ausführungsform des anmeldungsgemäßen Systems kann das Verarbeitungsmodul eingerichtet sein zum Auswerten der jeweiligen Wasserdruckabfälle, indem zumindest der Wasserauslass bestimmt wird, an dem der maximale Wasserdruckabfall (z.B. maximale Druckdifferenz und/oder maximale Steigung) erfasst wird bzw. vorliegt. Insbesondere kann eine bestimmte Vergleichsoperation durchgeführt werden.

Bei einem Wasserrohrbruch kann es an mehreren geschlossenen Wasserauslässen zu einem Wasserdruckabfall kommen. Es ist festgestellt worden, dass bei einem Wasserrohrbruch der Wasserdruckabfall (in der Regel) an dem Wasserauslass maximal (z.B. maximale Druckdifferenz und/oder maximale Steigung) ist, der sich (räumlich) am nächsten zu der Störungsposition, also der Rohrbuchposition, befindet. Durch Bestimmen des maximalen Druckabfalls kann die Störungsposition mit einer erhöhten Genauigkeit bestimmt werden.

Das Verarbeitungsmodul kann eingerichtet sein zum Bewirken eines Ausgebens der Störungsposition in dem Hauswasserversorgungsnetz, basierend auf dem bestimmten Wasserauslass. Insbesondere kann das zweite Kommunikationsmodul eine Push-Störungsnachricht aussenden, die zusätzlich eine Information über die Störungsposition enthält, wie eine bestimmte Raumangabe eines bestimmten Gebäudes. Es versteht sich, dass auch zwei Nachrichten ausgesendet werden können.

Gemäß einer weiteren Ausführungsform des anmeldungsgemäßen Systems kann das System mindestens einen (weiteren) Hausautomationssensor umfassen, eingerichtet zum Detektieren einer Anwesenheit eines Nutzers in dem Gebäude, insbesondere einem bestimmten Raum des Gebäudes. Das Verarbeitungsmodul der Hausautomationssteuerung kann zumindest eingerichtet sein zum Detektieren der Störung des Hauswasserversorgungsnetz durch Auswerten der empfangenen eingespeisten Wassermenge, der empfangenen entnommenen Wassermengen, der erfassten Wasserdrücke und der von dem mindestens einen Hausautomationssensor bereitgestellten Anwesenheitsinformation.

Als Hausautomationssensoren können allgemein Bewegungsmelder, Temperatursensoren, visuelle Sensoren, wie Kameras, Taster, Schalter, Dimmer, Durchflusssensoren, virtuelle Sensoren, also eine virtuelle Repräsentanz eines zuvor beschriebenen Sensors, beispielsweise eines Tasters, eines Schalters, eines Dreh- oder Schiebereglers, eines Dimmers, eines Temperaturreglers oder dergleichen, vorgesehen sein.

Vorzugsweise kann der mindestens eine Hausautomationssensor ein Bewegungssensor sein. Alternativ oder zusätzlich kann der mindestens eine Hausautomationssensor ein Tür- und/oder Fensterzustandserfassungssensor sein. Ein derartiger Sensor ist insbesondere eingerichtet zum Detektieren einer Anwesenheit/Abwesenheit eines Nutzers in dem Gebäude bzw. einem bestimmten Raum des Gebäudes. Auch hier kann eine Zuordnungstabelle gespeichert sein (in der Hausautomationssteuerung und/oder dem Backend), in der jedem Hausautomationssensor (mit einer systemweit eindeutigen Kennung) eine bestimmte Ortsinformation, wie ein bestimmter Raum (oder eine ähnliche Ortsangabe), zugeordnet ist. Ein Hausautomationssensor kann über einen konfigurierbaren Detektionsradius verfügen.

Insbesondere kann bei der Auswertung berücksichtigt werden, ob ein Nutzer anwesend ist oder nicht. Wird beispielsweise bei einem (manuell zu betreibenden) Wasserauslass festgestellt, dass dieser geöffnet ist, obwohl sich keine Person in dem Raum, der dem Wasserauslass bzw. der zugordneten Ausgangswassermesseinrichtung zugeordnet ist, befindet (und insbesondere nicht während eines detektierten Öffnungszeitpunkts befunden hat), kann auf eine Störung in Form eines defekten Wasserauslasses geschlossen werden.

Insbesondere kann in diesem Fall eine Störung detektiert werden und eine Push-Störungsnachricht ausgesendet werden, um beispielsweise den Nutzer zu informieren, dass aus einem Wasserauslass in einem bestimmten Raum eines bestimmten Gebäudes Wasser austritt (obwohl sich kein Nutzer in dem Raum und/oder dem Gebäude befindet).

Darüber hinaus ist erkannt worden, dass gemäß einer Ausführungsform ein Zustand einer in dem Gebäude befindlichen Person zumindest abhängig von den gemessenen Wassermengen überwacht werden kann. Insbesondere kann von der Hausautomationssteuerung die Zeitdauer, in der aus dem Hauswasserversorgungsnetz kein Wasser entnommen wird, erfasst werden. Es kann ein Zeitgrenzwert vorgegeben werden. Die gemessen Zeitdauer kann mit dem Zeitgrenzwert verglichen werden. Der Zeitgrenzwert kann derart gesetzt sein, dass bei einem normalen Betrieb des Hauswasserversorgungsnetzes vor Ablauf des Zeitgrenzwerts eine Wasserentnahme insbesondere von der zu überwachenden Person mit einer hohen Wahrscheinlichkeit (z.B. > 95 %) durchgeführt wird. Ein Überschreiten des Zeitgrenzwerts kann von der Hausautomationssteuerung als Indiz bewertet werden, dass ein kritischer (Gesundheits-)Zustand der Person vorliegt.

Die Zuverlässigkeit der Zustandsüberwachung der Person kann verbessert werden, wenn die Hausautomationssteuerung zusätzlich Daten von mindestens einem Hausautomationssensor und/oder vorgebbare Zustandsinformationen, wie Ab- bzw. Anwesenheitsinformationen der Person, berücksichtigt. Beispielsweise kann das Hausautomationssystem einen elektronischen, insbesondere intelligenten Türschließmechanismus umfassen. Der Türschließmechanismus kann Mittel umfassen, um beispielsweise die An- und Abwesenheit von Personen in dem Gebäude (automatisch) zu detektieren. Der Türschließmechanismus kann über ein mobiles Nutzerendgerät gesteuert, beispielsweise geöffnet und geschlossen, werden. Bei einem derartigen Türschließmechanismus kann zudem das Aufbrechen der Wohnungstür entfallen.

Vorzugsweise in Zusammenspiel mit mindestens einen weiteren Hausautomationssensor, wie einem (zuvor beschriebenen) Fenstersensor, einem Bewegungs- und/oder Rauchmelder, einer Rollladensteuerung und/oder einer integrierte Kamera kann der Zustand einer Person in dem Gebäude zuverlässig überwacht werden.

Die Hausautomationssteuerung kann, wie zuvor ausgeführt wurde, ein Backendsystem und/oder ein Nutzerendgerät entsprechend informieren.

Alternativ oder zusätzlich kann vorgesehen sein, dass mindestens ein weiterer Parameter durch ein weiteres Sensormodul der Eingangswassermesseinrichtung und/oder der Ausgangswassermesseinrichtung gemessen wird, wobei der mindestens eine weitere Parameter insbesondere ausgewählt sein kann aus der Gruppe, umfassend Wassertemperatur des Wassers in dem Hauswasserversorgungsnetz, pH-Wert des Wassers in dem Hauswasserversorgungsnetz, Wasserhärte des Wassers in dem Hauswasserversorgungsnetz und/oder Umgebungsfeuchtigkeit in einer vorgebbaren Umgebung zum Hauswasserversorgungsnetz .

Bei einer Ausführungsform kann vorgesehen sein, dass mindestens eine Statusinformation abhängig von dem mindesten einen bereitgestellten weiteren Parameter von der Hausautomationssteuerung an ein Backendsystem und/oder ein Nutzerendgerät übertragen wird. Beispielsweise kann ein Nutzer über die Wasserqualität hierdurch informiert werden.

Bei der Umgebungsfeuchtigkeit kann es sich beispielsweise um die Feuchtigkeit an einer insbesondere tiefgelegenen Stelle des Gebäudes, wie einem Keller, handeln. Hierdurch kann insbesondere ein Wassereinbruch in dem Gebäude frühzeitig detektiert werden. Dies kann entsprechend den vorherigen Ausführungen von der Hausautomationssteuerung detektiert werden. Insbesondere kann, basierend auf einer (zuvor beschriebenen) Zuordnungstabelle die Störungsposition zusätzlich zu der Störungsdetektion an sich detektiert werden und insbesondere zumindest an das Nutzerendgerät gemeldet werden.

Vorteilhafterweise kann ferner alternativ oder zusätzlich zumindest die Wassertemperatur erfasst werden. Es ist erkannt worden, dass die gemessene Wassertemperatur ein Indiz für eine erhöhte Überflutungsgefahr sein kann. Insbesondere kann eine Wassertemperatur unterhalb einer bestimmten Grenzwerttemperatur implizieren, dass die Schneeschmelze eingesetzt hat. Eine entsprechende Warnmeldung kann an mindestens ein Nutzerendgerät durch die Hausautomationssteuerung (direkt oder indirekt) übertragen werden. Der Nutzer kann dann ggf. geeignete Maßnahmen ergreifen. Ferner kann die Information zur Warnung anderer Einsatzmittel und/oder Bewohner von anderen Gebäuden genutzt werden.

Darüber hinaus können Eigenschaften des Wassers, wie Wasserhärte und/oder pH-Wert des Wassers, von mindestens einem geeigneten Sensormodul gemessen und über den zuvor beschriebenen Weg einem Nutzer kenntlich gemacht werden. Der Nutzer kann basierend auf den Wasserqualitätswerten ggf. geeignete Maßnahmen, wie zusätzliche Filtermittel, etc., ergreifen, um den entsprechenden Wasserparameter zu verändern.

Gemäß einer weiteren Ausführungsform des anmeldungsgemäßen Systems kann die Hausautomationssteuerung ein Mustererkennungsmodul umfassen, eingerichtet zum Erkennen eines zeitlichen und regelmäßig auftretenden Wasserverbrauchsprofils zumindest aus der empfangenen entnommenen Wassermenge mindestens eines bestimmten Wasserauslasses. Beispielsweise kann das Mustererkennungsmodul erfassen, dass an jedem Tag (oder jedem Werktag, jedem zweiten Tag etc.) ein bestimmter Wasserauslass zum Beispiel für eine bestimmte Zeitdauer zu einem bestimmten Zeitpunkt geöffnet wird. Beispielsweise kann festgestellt werden, dass montags bis freitags die Dusche für einen bestimmten Zeitraum (z.B. 5 Minuten) um eine bestimmte Uhrzeit (z.B. 7:00 Uhr) betrieben wird.

Das erste Kommunikationsmodul der Hausautomationssteuerung kann eingerichtet sein zum Ansteuern mindestens eines Aktors, basierend auf dem erkannten (und insbesondere gespeicherten mindestens einen) Wasserverbrauchsprofil.

Insbesondere kann, gemäß einer Ausführungsform des anmeldungsgemäßen Systems, das erste Kommunikationsmodul der Hausautomationssteuerung eingerichtet sein zum Ansteuern eines Heizungsventils eines Heizkörpers des Systems zu einem bestimmten Zeitpunkt, basierend auf dem erkannten Wasserverbrauchsprofil. Ausgehend von dem oben genannten Beispiel kann beispielsweise der Heizkörper in dem Raum, der dem Wasserauslass, d.h. vorliegend der Dusche, zugeordnet ist, zu einem bestimmten Zeitpunkt (z.B. um 6:00 Uhr) vor dem Zeitpunkt der Aktivierung der Dusche (vorliegend beispielhaft 7:00 Uhr) aktiviert werden, um den Raum (insbesondere effizient und optimal) vorzuwärmen. Anders ausgedrückt kann die Beheizung des Badezimmers optimiert werden. Es versteht sich, dass mindestens ein Umgebungsparameter hierbei berücksichtigt werden kann, wie die augenblickliche Außentemperatur.

Alternativ oder zusätzlich kann das erste Kommunikationsmodul der Hausautomationssteuerung eingerichtet sein zum Ansteuern einer Warmwasseraufbereitungsanlage des Systems zu einem bestimmten Zeitpunkt, basierend auf dem erkannten Wasserverbrauchsprofil. Insbesondere kann die Warmwasseraufbereitung optimiert werden, wenn die - ausgehend von dem obigen Beispiel - die Wasseraufbereitung x Minuten (oder ein bestimmte andere Zeitdauer) vor dem Zeitpunkt der Aktivierung der Dusche aktiviert wird. Die Energieeffizienz und der Nutzerkomfort können verbessert werden.

Ein weiterer Aspekt der Anmeldung ist ein Verfahren zum Betreiben eines Hausautomationssystems mit einem Hauswasserversorgungsnetz, insbesondere zum Betreiben eines zuvor beschriebenen Hausautomationssystems (insbesondere zum Überwachen des Hauswasserversorgungsnetzes). Das Verfahren umfasst:

-   Messen, durch mindestens ein Messmodul einer Eingangswassermesseinrichtung, der in das Hauswasserversorgungsnetz eingespeisten Wassermenge,
-   Übertragen, durch mindestens ein erstes Kommunikationsmodul der Eingangswassermesseinrichtung, der gemessenen eingespeisten Wassermenge über ein Hauskommunikationsnetz an ein erstes Kommunikationsmodul einer Hausautomationssteuerung,
-   jeweiliges Messen, durch jeweils mindestens ein erstes Messmodul einer jeweiligen Ausgangswassermesseinrichtung, die jeweils einem jeweilige Wasserauslass zugeordnet ist, der durch den jeweils zugeordneten Wasserauslass entnommenen Wassermenge,
-   jeweiliges Messen, durch jeweils mindestens ein zweites Messmodul der jeweiligen Ausgangswassermesseinrichtung, des Wasserdrucks an dem jeweils zugeordneten Wasserauslass, und
-   jeweiliges Übertragen, durch jeweils mindestens ein Kommunikationsmodul, der jeweils gemessenen entnommenen Wassermenge und des jeweils gemessenen Wasserdrucks über das Hauskommunikationsnetz an das erste Kommunikationsmodul der Hausautomationssteuerung,

- Detektieren, durch ein Verarbeitungsmodul der Hausautomationssteuerung, zumindest einer Störung des Hauswasserversorgungsnetz durch Auswerten zumindest der empfangenen eingespeisten Wassermenge, der empfangenen entnommenen Wassermengen und der erfassten Wasserdrücke, und

- Aussenden, durch ein zweites Kommunikationsmodul der Hausautomationssteuerung einer Push-Störungsnachricht über das Fernkommunikationsnetz bei einer Detektion einer Störung des Hauswasserversorgungsnetzes.

Es sei angemerkt, dass eine anmeldungsgemäße Einrichtung und/oder ein anmeldungsgemäßes Modul zumindest teilweise aus Hardware (z.B. Gehäuse, Prozessor, Speichermittel, Schnittstellen) etc. und/oder zumindest teilweise aus Software (logische Regeln, logische Schnittstellen, Programmcode etc.) gebildet sein kann/können.

Die Merkmale der Verfahren und Systeme sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die erfindungsgemäße Hausautomationssystem und das erfindungsgemäße Verfahren auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:

Fig. 1    eine schematische Ansicht eines Ausführungsbeispiels eines Hausautomationssystems gemäß der vorliegenden Anmeldung insbesondere zum Überwachen eines Hauswasserversorgungsnetzes, und

Fig. 2    ein schematisches Diagramm eines Ausführungsbeispiels eines Verfahrens gemäß der vorliegenden Anmeldung zum Betreiben eines Hauswasserversorgungsnetzes, insbesondere zum Überwachen eines Hauswasserversorgungsn etzes.

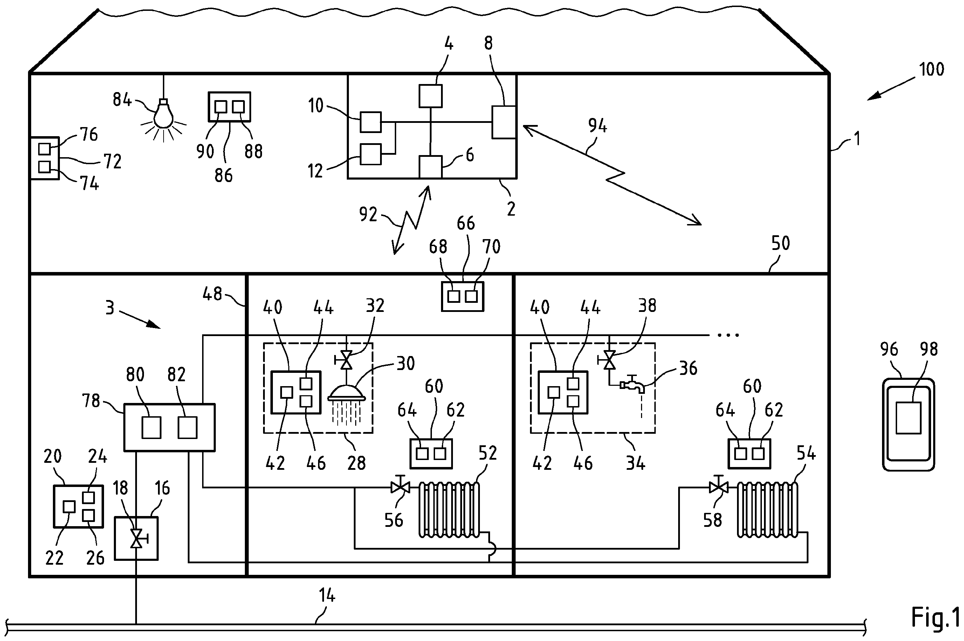

Die Figur 1 zeigt eine schematische Ansicht eines Ausführungsbeispiels eines Hausautomationssystems 100 gemäß der vorliegenden Anmeldung, insbesondere zum Überwachen eines Hauswasserversorgungsnetzes 3.

Im vorliegenden Ausführungsbeispiel ist das zu überwachende Hauswasserversorgungsnetz 3 ein in einem Gebäude 1 bzw. auf einem abgrenzbaren Grundstück installiertes Wasserleitungsnetz 3. Beispielsweise können Rohrleitungen innerhalb des Gebäudes 3, also in oder an Wänden, Decken, Böden etc., verlaufen und/oder außerhalb des Gebäudes 3, beispielsweise zur Bewässerung eines Gartens. Insbesondere handelt es sich bei dem vorliegenden Hauswasserversorgungsnetz 3 um ein privates und von einem allgemeinen (öffentlichen) Wasserversorgungsnetz 14 abgetrenntes Wasserleitungsnetz 3.

Das Hauswasserversorgungsnetz 3 weist vorliegend einen (Eingangs-) Anschluss 16 bzw. eine Zuleitung 16 auf, eingerichtet für eine Kopplung des Hauswasserversorgungsnetzes 3 mit einem öffentlichen Wasserversorgungsnetz 14.

Der Anschluss 16, insbesondere ein Hausanschluss 16 mit Wasserhauseinführung, kann ein Ventil 18 bzw. ein Absperrmittel 18 zum Steuern des Zuflusses von Wasser in das Hauswasserversorgungsnetz 3 aufweisen. Insbesondere kann ein elektromechanisches Ventil vorgesehen sein, welches zumindest zwischen zwei Ventilpositionen (geöffnet und geschlossen bzw. abgesperrt) verfahrbar bzw. bewegbar ist.

Es versteht sich, dass anstelle eines öffentlichen Wasserversorgungsnetzes oder zusätzlich hierzu auch mindestens eine andere Wasserquelle zum Speisen des Hauswasserversorgungsnetzes vorgesehen sein kann. Beispielsweise kann alternativ oder zusätzlich ein Wasserbrunnen vorgesehen sein.

Das Hauswasserversorgungsnetz 3 kann aus mindestens einem Wasserleitungsrohr gebildet sein. Die mindestens eine Rohrleitung bzw. das mindestens eine Wasserleitungsrohr des Hauswasserversorgungsnetzes 3 kann eine kleine Nennweite aufweisen. Eine Mehrzahl von Rohrleitungen kann aus dem gleichen Werkstoff oder aus unterschiedlichen Werkstoffen gebildet sein und insbesondere einem Druck von zumindest 6 bar standhalten. Als Werkstoffe können Kupfer, nichtrostender Stahl, Kunststoff, Kunststoff-Verbundsysteme und dergleichen zum Einsatz kommen.

Dem (einzigen) Anschluss 106 des Hauswasserversorgungsnetzes 3 zugeordnet ist eine Eingangswassermesseinrichtung 20. Die Eingangswassermesseinrichtung 20 kann in einem Gehäuse mindestens ein Messmodul 24 (z.B. ein Durchflusssensor) aufweisen, eingerichtet zum Messen der in das Hauswasserversorgungsnetz 3 eingespeisten Wassermenge. Die Eingangswassermesseinrichtung 20 kann optional in seinem Gehäuse ein Ventilsteuermodul 26 aufweisen, eingerichtet zum Ansteuern des Ventils 18 in der Zuleitung 16 des Hauswasserversorgungsnetzes 3, derart, dass ein Verfahren des Ventils 18 zumindest zwischen den genannten mindestens zwei Ventilpositionen bewirkt werden kann.

Ferner kann die Eingangswassermesseinrichtung 20 in dem Gehäuse mindestens ein erstes Kommunikationsmodul 22 aufweisen, eingerichtet zum Übertragen der gemessenen eingespeisten Wassermenge über das (drahtlose und/oder drahtgebundene) Hauskommunikationsnetz 92 an ein erstes Kommunikationsmodul 6 einer Hausautomationssteuerung 2. Optional kann das Kommunikationsmodul 22 der Eingangswassermesseinrichtung 20 eingerichtet sein zum Empfangen eines Ventilansteuersignals von dem ersten Kommunikationsmodul 6 der Hausautomationssteuerung 2 über das Hauskommunikationsnetz 92 bei Detektion einer Störung des Hauswasserversorgungsnetzes 3. Vorzugsweise kann die Eingangswassermesseinrichtung 20 an dem Anschluss 16 angeordnet sein, insbesondere mit dem Anschluss ein gemeinsames Bauteil bilden.

Ferner weist das Hausautomationssystem 100, wie bereits erwähnt, eine lokale Hausautomationssteuerung 2 auf. Insbesondere können eine Vielzahl von Aktoren und/oder Sensoren des Gebäudes 1 mit der Hausautomationssteuerung 2 vernetzt sein.

Die Hausautomationssteuerung 2 weist zumindest ein erstes Kommunikationsmodul 6 und ein zweites Kommunikationsmodul 8 auf. Das erste Kommunikationsmodul 6 ist insbesondere ein Nahfeld-Kommunikationsmodul 6 und das zweite Kommunikationsmodul 8 ist insbesondere ein Fernfeld-Kommunikationsmodul 8. Das mindestens eine erste Kommunikationsmodul 6 ist eingerichtet zum Kommunizieren über das lokale Hauskommunikationsnetz 92 und das mindestens eine zweite Kommunikationsmodul 8 ist eingerichtet zum Kommunizieren über ein (drahtloses und/oder drahtgebundenes) Fernkommunikationsnetz 94, beispielsweise mit einem (mobilen) Nutzerendgerät 96. Das Nutzerendgerät 96, beispielsweise ein Smartphone, kann eine Nutzeranwendung 98 (z.B. eine App) umfassen, um mit der Hausautomationssteuerung 2 direkt und/oder indirekt (z.B. über ein nicht gezeigtes Backendsystem) interagieren.

Ferner umfasst die Hausautomationssteuerung 2 mindestens ein Verarbeitungsmodul 4, eingerichtet zum Verarbeiten von empfangenen Daten, wie noch ausgeführt werden wird. Optional kann die Hausautomationssteuerung 2 einen Datenspeicher 12 und insbesondere ein Mustererkennungsmodul 10 umfassen, eingerichtet zum Erkennen eines zeitlichen und regelmäßig auftretenden Wasserverbrauchsprofils zumindest aus der empfangenen entnommenen Wassermenge mindestens eines bestimmten Wasserauslasses 30, 36.

Das Hauswasserversorgungsnetz 3 umfasst eine Mehrzahl an Wasserauslässen 28, 34 (in einem Spezialfall ist auch denkbar, dass nur ein einzelner Auslass vorhanden ist). Beispielhaft weist ein Wasserauslass 28 einen Duschauslas 30 (z.B. Duschkopf 30) und ein Wasserauslass 34 einen Wasserhahn 36 auf.

Die Rohrleitungen des Hauswasserversorgungsnetzes 3 sind eingerichtet, zumindest die Wasserauslässe 28, 34 mit Wasser zu versorgen. Beispielhafte und nicht abschließende (weitere) Wasserauslässe, auch Wasserverbraucher genannt, sind Waschmaschine, Spülmaschine etc.

Es versteht sich, dass eine Vielzahl von den vorgenannten Wasserauslässen in oder an dem Gebäude 1 oder zumindest auf dem zugehörigen Grundstück des Gebäudes 1 vorgesehen sein kann. Jeder Wasserauslass 28, 34 verfügt ferner über ein Ventil 32, 38, um den Durchfluss durch den jeweiligen Wasserauslass 28, 34 zu steuern. Insbesondere kann ein Ventil 32, 38 (z.B. manuell) zwischen mindestens zwei Ventilpositionen (geöffnet, d.h. Wasser kann entnommen werden; geschlossen, d.h. es erfolgt keine Wasserentnahme) bewegt werden. Es versteht sich, dass Zwischenpositionen vorgesehen sein können.

Wie zu erkennen ist, ist jedem Wasserauslass 28, 34 anmeldungsgemäß jeweils eine Ausgangswassermesseinrichtung 40 zugeordnet. Jede Ausgangswassermesseinrichtung 40 kann in einem Gehäuse ein erstes Messmodul 44, ein zweites Messmodul 46 und ein Kommunikationsmodul 42 aufweisen. Vorzugsweise kann eine derartige Ausgangswassermesseinrichtung 40 in einem Wasserauslass 28, 34 integriert sein.

Das mindestens eine erste Messmodul 44 (z.B. ein Durchflusssensor) ist eingerichtet zum Messen der dem Hauswasserversorgungsnetz 3 durch den zugeordneten Wasserauslass 28, 34 entnommenen Wassermenge. Das mindestens eine zweite Messmodul 46 (z.B. ein Manometer) ist eingerichtet zum Messen des Wasserdrucks an dem zugeordneten Wasserauslass 28, 34, insbesondere in Durchflussrichtung gesehen vor dem jeweiligen Ventil 32, 38.

Das mindestens eine Kommunikationsmodul 42 ist eingerichtet zumindest zum Übertragen der gemessenen entnommenen Wassermenge und des gemessenen Wasserdrucks über das Hauskommunikationsnetz 92 an das erste Kommunikationsmodul 6 der Hausautomationssteuerung 2, beispielsweise in Form von einem oder mehreren Datenpaketen.

Ferner kann das Hauswasserversorgungsnetz 3 optional Heizkörper 52, 54 als thermische Verbraucher umfassen, die ebenfalls mit Wasser durch Rohrleitungen des Hauswasserversorgungsnetzes 3 versorgt werden können. Im vorliegenden Ausführungsbeispiel weist jeder Heizkörper 52, 54 ein verstellbares Heizungsventil 56, 58 auf. Jedem Heizkörper 52, 54 kann zudem ein Steuer- bzw. Aktormodul 60 zugeordnet sein, umfassend ein Kommunikationsmodul 64, eingerichtet zum Empfangen von einem Steuersignal von der Hausautomationssteuerung 2, und ein Ventilsteuermodul 62, eingerichtet zum Ansteuern des Heizungsventil 56, 58, basierend auf einem empfangenen Steuersignal. Das Steuersignal kann beispielsweise eine Solltemperatur und/oder ein Stellbefehl zum Verstellen des Heizungsventils 56, 58 enthalten.

Optional kann eine (zentrale) Temperierungsvorrichtung 78 in Form einer Heizvorrichtung 78 vorgesehen sein. Im vorliegenden Beispiel wird nachfolgend von einer Gasheizung 78 ausgegangen. Jedoch können die nachfolgenden Ausführungen in einfacher Weise auf andere Heizvorrichtungen übertragen werden.

Die Gasheizung 78 weist einen Verbrenner 80 auf, der eingerichtet sein kann, bereitgestelltes Wasser durch Verbrennen eines bereitgestellten Gases (in herkömmlicher Weise) zu erwärmen. Die Gasheizung 78 kann dann das erwärmte Wasser und damit die generierte thermische Energie in das Hauswasserversorgungsnetzes 3 einspeisen, um beispielsweise einen Heizkörper 52, 54, aber auch einen Wasserauslass 28, 34 mit dem erwärmten Wasser zu versorgen. Die Gasheizung 78 weist ebenfalls ein Kommunikationsmodul 82 auf, um mit der Hausautomationssteuerung 2 zu kommunizieren.

Darüber hinaus umfasst das Hausautomationssystem 100 optional eine Vielzahl an Hausautomationssensoren 66, 72. Jeder der zwei dargestellten Hausautomationssensoren 66, 72 kann über ein Kommunikationsmodul 68, 74 und mindestens ein Sensormodul 70, 76 verfügen. Beispielhaft ist vorliegend ein Bewegungssensor 66 und ein Tür- und/oder Fensterzustandserfassungssensor 72, der beispielweise an einer (nicht gezeigten) Tür und/oder einem Fenster angeordnet sein kann.

Das jeweilige Kommunikationsmodul 68, 74 ist insbesondere eingerichtet, die jeweils erfassten Sensordaten über das Hauskommunikationsnetz 92 an die Hausautomationssteuerung 2 zu übertragen.

Ferner kann das Hausautomationssystem 100 optional eine Vielzahl von Hausautomationsaktoren 86 umfassen. Zur besseren Übersicht ist nur ein Hausautomationsaktor 86 dargestellt. Der Hausautomationsaktor 86 umfasst ein Kommunikationsmodul 88 und ein Aktormodul 90, vorliegend beispielhaft eingerichtet, um eine zugeordnete Beleuchtungsvorrichtung 84 zu aktivieren/deaktivieren. Das Kommunikationsmodul 88 kann eingerichtet sein, ein Aktivierungs-/Deaktivierungssignal bzw. -nachricht von der Hausautomationssteuerung 2 über das Hauskommunikationsnetz 92 zu empfangen.

Vorzugsweise sämtliche Komponenten, die über ein Kommunikationsmodul verfügen, kann in dem System 100 eine systemweit eindeutige Kennung zugeordnet sein. In einer Zuordnungstabelle, die in dem Datenspeicher 12 und/oder einem (nicht gezeigten) Backendsystem gespeichert sein kann, kann zumindest einer Mehrzahl der Kennungen jeweils eine Ortsinformation zugeordnet sein. Beispielsweise kann dem Hausautomationssensor 66, der Eingangswassermesseinrichtung 40 des Wasserauslasses 28 und dem Steuermodul 60 des Heizkörpers 52 als Ortsinformation der Raum 48 (z.B. ein Badezimmer 48 im Erdgeschoss des Gebäudes 1) zugeordnet sein, in dem sich die genannten Elemente 28, 40, 52, 60 und 66 befinden.

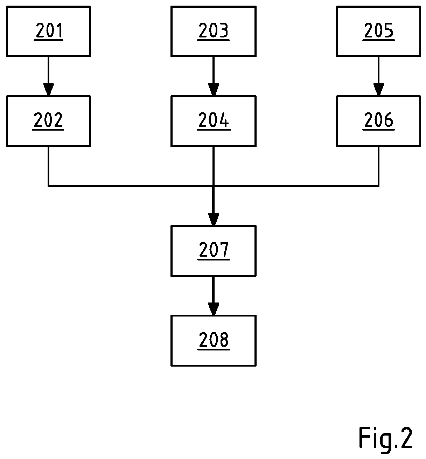

Die Funktionsweise des Hausautomationssystems 100 wird näher mit Hilfe der Figur 2 beschrieben. Die Figur 2 zeigt ein schematisches Diagramm eines Ausführungsbeispiels eines Verfahrens gemäß der vorliegenden Anmeldung zum Betreiben eines Hauswasserversorgungsnetzes 3, insbesondere zum Überwachen eines Hauswasserversorgungsnetzes 3.

In einem Schritt 201 erfolgt ein Messen der in das Hauswasserversorgungsnetz 3 eingespeisten Wassermenge durch das Messmodul 24 der Eingangswassermesseinrichtung 20.

In Schritt 202 erfolgt ein Übertragen, durch das Kommunikationsmodul 22 der Eingangswassermesseinrichtung 20, der gemessenen eingespeisten Wassermenge über das Hauskommunikationsnetz 92 an das erste Kommunikationsmodul 6 der Hausautomationssteuerung 2. Die Schritte 201, 202 können insbesondere kontinuierlich und zumindest teilweise parallel durchgeführt werden.

In einem Schritt 203 messen die jeweiligen ersten Messmodule 44 der jeweiligen Ausgangswassermesseinrichtungen 40 die Wassermenge, die durch den der jeweiligen Ausgangswassermesseinrichtung 40 zugeordneten Wasserauslass 28, 34 entnommen wird.

In Schritt 204 erfolgt ein Übertragen, durch das jeweilige Kommunikationsmodul 42 der jeweiligen Ausgangswassermesseinrichtung 40, der jeweils gemessenen Wassermenge über das Hauskommunikationsnetz 92 an das erste Kommunikationsmodul 6 der Hausautomationssteuerung 2. Die Schritte 203, 204 können insbesondere kontinuierlich und zumindest teilweise parallel durchgeführt werden. Die Schritte 203, 204 können parallel zu den Schritten 201, 202 durchgeführt werden.

In einem Schritt 205 messen die jeweiligen zweiten Messmodule 46 der jeweiligen Ausgangswassermesseinrichtungen 40 den jeweiligen Wasserdruck an dem jeweils zugeordneten Wasserauslass 28, 34. In Schritt 206 erfolgt ein Übertragen, des jeweils gemessenen Wasserdrucks durch das jeweilige Kommunikationsmodul 42 der jeweiligen Ausgangswassermesseinrichtung 40 über das Hauskommunikationsnetz 92 an das erste Kommunikationsmodul 6 der Hausautomationssteuerung 2. Die Schritte 205, 206 können insbesondere kontinuierlich und zumindest teilweise parallel durchgeführt werden. Die Schritte 205, 206 können parallel zu den Schritten 201, 202 durchgeführt werden.

In Schritt 207 kann (kontinuierlich) eine Auswertung der empfangenen Sensordaten durch das Verarbeitungsmodul 4 erfolgen, um insbesondere eine Störung des Hauswasserversorgungsnetzes 3 zu detektieren.

Das Verarbeitungsmodul 4 der Hausautomationssteuerung 2 kann insbesondere eingerichtet sein zum Detektieren der Störung des Hauswasserversorgungsnetz 3 durch ein Vergleichen der augenblicklich in das Hauswasserversorgungsnetz 3 eingespeisten Wassermenge und der durch sämtliche Wasserauslässe 28, 34 augenblicklich entnommenen Wassermenge.

Insbesondere kann in einer (kontinuierlich ausführbaren) Vergleichsoperation in Schritt 207 die zu gleichen Zeitpunkten entnommene (Gesamt-) Wassermenge mit der eingespeisten (Gesamt-) Wassermenge verglichen werden. Beispielsweise kann die genannten Regel (a) abgearbeitet werden:

$$V_{diff} = V_{eing} - \sum V_{entn,i},$$

wobei $V_{eing}$ die erfasste eingespeiste Wassermenge, $V_{entn,i}$ die jeweils erfassten entnommenen Wassermenge und $V_{diff}$ die berechnete Wassermengendifferenz ist.

Eine Störung des Hauswasserversorgungsnetzes 3 wird insbesondere detektiert, wenn durch das Vergleichen eine Differenz $V_{diff}$ bestimmt wird, die größer ist als ein vorgegebener Grenzwert $V_{diff, grenz}$. Bei einer bevorzugten Ausführungsform kann der vorgegebene Grenzwert $V_{diff, grenz}$ null sein. In diesem Fall kann in sicherer Weise auch eine Mikroleckage detektiert werden. Wenn mit Messfehlern aufgrund der eingesetzten Bauteile zu rechnen ist, kann auch ein Grenzwert $V_{diff, grenz}$ ungleich null vorgegeben werden.

Optional kann bei der Auswertung Anwesenheit/Abwesenheit eines Nutzers in dem Gebäude (insbesondere einem bestimmten Raum 48, 50), die durch einen Hausautomationssensor 66, 76 erfasst werden kann, berücksichtigt werden.

Ferner kann optional eine Störungsposition der detektierten Störung bestimmt werden. Vorzugsweise kann, wie bereits beschrieben wurde, jede Ausgangswassermesseinrichtung 40 systemweit eine eindeutige Kennung aufweisen. Mit der Kennung kann der jeweils zugeordnete Wasserauslass 28, 34, also ein einzelner Wasserauslass oder eine Gruppe von Sub-Wasserauslässen, eindeutig identifiziert werden.

Vorzugsweise kann eine Zuordnungstabelle (oder dergleichen) gespeichert sein, vorzugsweise in dem Datenspeicher 12 der Hausautomationssteuerung 2 (und/oder in einem Backendsystem), in der vorzugsweise jeder Kennung jeweils eine Ortsinformation, insbesondere ein bestimmter Raum 48, 50, zugeordnet sein kann. Die jeweiligen Kommunikationsmodule 42 der Ausgangswassermesseinrichtungen 40 können insbesondere eingerichtet sein, die erfassten Sensordaten jeweils zusammen mit der jeweiligen Kennung (z.B. ein Code, eine Kommunikationsadresse etc.) auszusenden. Dann kann eine Zuordnung von Sensordaten zu einem bestimmten Raum 48, 50 erfolgen.

Insbesondere kann aus einem Druckabfall, der durch Auswerten von gemessenen zeitabhängigen Wasserdruckwerten bestimmt werden kann, auf eine Störungsposition geschlossen werden. Wenn ein Druckabfall an einem Wasserauslass, z.B. 28, detektiert wird, aus dem augenblicklich kein Wasser entnommen wird, dann ist dies ein Indiz dafür (wenn gleichzeitig eine Störung detektiert wird, beispielsweise durch Auswerten der Regel (a)), dass sich eine Störung des Hauswasserversorgungsnetz 3 in der Nähe von diesem Wasserauslass 28 befindet, insbesondere in dem Raum 48, der dem Wasserauslass 28 bzw. der Ausgangswassermesseinrichtung 40 gemäß der gespeicherten Zuordnungstabelle zugeordnet ist.

Insbesondere kann das Verarbeitungsmodul 4 eingerichtet sein zum Auswerten der jeweiligen Wasserdruckabfälle, indem zumindest der Wasserauslass 28, 34 bestimmt wird, an dem der maximale Wasserdruckabfall (z.B. maximale Druckdifferenz und/oder maximale Steigung) erfasst wird. Insbesondere kann eine bestimmte Vergleichsoperation durchgeführt werden. Bei einem Wasserrohrbruch kann der Wasserdruckabfall (in der Regel) an dem Wasserauslass 28, 34 maximal (z.B. maximale Druckdifferenz und/oder maximale Steigung) sein, der sich (räumlich) am nächsten zu der Störungsposition, also dem Rohrbuchposition, befindet.

Wenn eine Störung detektiert wird, erfolgt in Schritt 208 ein Aussenden, durch ein zweites Kommunikationsmodul 8 der Hausautomationssteuerung 2, einer Push-Störungsnachricht über das Fernkommunikationsnetz 94 (unmittelbar und mittelbar (z.B. via einem Backendsystem)) an mindestens ein Nutzerendgerät 96. Die Push-Störungsnachricht kann auf dem Nutzerendgerät 96 angezeigt werden. Wenn eine Störungsposition bestimmt wurde, kann diese ebenfalls übertragen und angezeigt werden.

Optional kann ferner das erste Kommunikationsmodul 6 der Hausautomationssteuerung 2 eingerichtet sein zum Aussenden eines Ventilansteuersignals an das Kommunikationsmodul 22 der Eingangswassermesseinrichtung 20 über das Hauskommunikationsnetz 92 bei Detektion einer Störung des Hauswasserversorgungsnetzes 3, wobei das Ventilsteuermodul 26 bei einem Empfang des Ventilansteuersignals das Ventil 18 entsprechend dem empfangenen Ventilansteuersignal ansteuert, insbesondere eine Schließung des Ventils 18 bewirkt.

Um insbesondere den Nutzerkomfort zu verbessern, kann das Mustererkennungsmodul 10 in einem nicht dargestellten Schritt eingerichtet sein zum Erkennen mindestens eines zeitlichen und regelmäßig auftretendem Wasserverbrauchsprofil zumindest aus der empfangenen entnommenen Wassermenge mindestens eines bestimmten Wasserauslasses 28, 34.

Beispielsweise kann das Mustererkennungsmodul 10 erfassen, dass an jedem Tag (oder jedem Werktag, jedem zweiten Tag etc.) ein bestimmter Wasserauslass 28, 34 zum Beispiel für eine bestimmte Zeitdauer zu einem bestimmten Zeitpunkt geöffnet wird. Beispielsweise kann festgestellt werden, dass montags bis freitags die Dusche 28 für einen bestimmten Zeitraum (z.B. 5 Minuten) um eine bestimmte Uhrzeit (z.B. 7:00 Uhr) betrieben wird. Das Wasserverbrauchsprofil bzw. das Muster kann in dem Datenspeicher 12 gespeichert werden. Bei einer Detektion einer Änderung des Nutzerverhaltens kann ein gespeichertes Wasserverbrauchsprofil durch das Mustererkennungsmodul 10 geändert werden.

Das erste Kommunikationsmodul 6 der Hausautomationssteuerung 2 kann eingerichtet sein zum Ansteuern mindestens eines Aktors 60, 72, basierend auf dem mindestens einen erkannten und insbesondere in dem Datenspeicher 12 gespeicherten Wasserverbrauchsprofil. Insbesondere kann das erste Kommunikationsmodul 6 der Hausautomationssteuerung 2 eingerichtet sein zum Ansteuern eines Heizungsventils 56, 58 eines Heizkörpers 52, 54 unter Nutzung des jeweiligen Steuermoduls 60 des jeweiligen Heizungsventils 56, 58 zu einem bestimmten Zeitpunkt, basierend auf dem erkannten Wasserverbrauchsprofil.

Ausgehend von dem oben genannten Beispiel kann beispielsweise der Heizkörper 52 in dem Raum 48, der dem Wasserauslass 28, d.h. vorliegend der Dusche 28, zugordnet ist, zu einem bestimmten Zeitpunkt (z.B. um 6:00 Uhr) vor dem Zeitpunkt der Aktivierung aktiviert werden, um den Raum 48 effizient und optimal vorzuwärmen. Anders ausgedrückt kann die Beheizung des Badezimmers 48 optimiert werden. Es versteht sich, dass mindestens ein Umgebungsparameter berücksichtigt werden kann, wie die augenblickliche Außentemperatur.

Alternativ oder zusätzlich kann das erste Kommunikationsmodul 6 der Hausautomationssteuerung 2 eingerichtet sein zum Ansteuern der Warmwasseraufbereitungsanlage 78 zu einem bestimmten Zeitpunkt, basierend auf dem erkannten Wasserverbrauchsprofil. Insbesondere kann die Warmwasseraufbereitung 78 optimiert werden, wenn die - ausgehend von dem obigen Beispiel - die Wasseraufbereitung x Minuten (oder ein bestimmte andere Zeitdauer) vor dem Aktivieren der Dusche 28 aktiviert wird.

**Patentansprüche**

1. Hausautomationssystem (100), umfassend:

    - mindestens eine Hausautomationssteuerung (2),
    - wobei die Hausautomationssteuerung (2) umfasst:

        - mindestens ein erstes Kommunikationsmodul (6), eingerichtet zum Kommunizieren über ein Hauskommunikationsnetz (92),
        - mindestens ein zweites Kommunikationsmodul (8), eingerichtet zum Kommunizieren über ein Fernkommunikationsnetz (94), und
        - mindestens ein Verarbeitungsmodul (4), eingerichtet zum Verarbeiten von empfangenen Daten,

    - eine Eingangswassermesseinrichtung (20), umfassend:

        - mindestens ein Messmodul (24), eingerichtet zum Messen der in ein Hauswasserversorgungsnetz (3) eingespeisten Wassermenge,

        - mindestens ein Kommunikationsmodul (22), eingerichtet zum Übertragen der gemessenen eingespeisten Wassermenge über das Hauskommunikationsnetz (92) an das erste Kommunikationsmodul (6) der Hausautomationssteuerung (2),

    - eine Mehrzahl von Ausgangswassermesseinrichtungen (40), wobei jedem Wasserauslass (28, 34) des Hauswasserversorgungsnetzes (3) jeweils eine Ausgangswassermesseinrichtung (40) zugeordnet ist, wobei jede Ausgangswassermesseinrichtung (40) umfasst:

        - mindestens ein erstes Messmodul (44), eingerichtet zum Messen der dem Hauswasserversorgungsnetz (3) durch den zugeordneten Wasserauslass (28, 34) entnommenen Wassermenge,
        - mindestens ein zweites Messmodul (46), eingerichtet zum Messen des Wasserdrucks an dem zugeordneten Wasserauslass (28, 34), und
        - mindestens ein Kommunikationsmodul (42), eingerichtet zum Übertragen der gemessenen entnommenen Wassermenge und des gemessenen Wasserdrucks über das Hauskommunikationsnetz (92) an das erste Kommunikationsmodul (6) der Hausautomationssteuerung (2),

    - wobei das Verarbeitungsmodul (4) der Hausautomationssteuerung (2) zumindest eingerichtet ist zum Detektieren einer Störung des Hauswasserversorgungsnetz (3) durch Auswerten zumindest der empfangenen eingespeisten Wassermenge, der empfangenen entnommenen Wassermengen und der erfassten Wasserdrücke, und
    - wobei das zweite Kommunikationsmodul (8) der Hausautomationssteuerung (2) eingerichtet ist zum Aussenden einer Push-Störungsnachricht über das Fernkommunikationsnetz (94) bei Detektion einer Störung des Hauswasserversorgungsnetzes (3).

2. System (100) nach Anspruch 1, **dadurch gekennzeichnet, dass**

    - die Eingangswassermesseinrichtung (20) mindestens ein Ventilsteuermodul (26) umfasst, eingerichtet zum Ansteuern eines Ventils (18) in der Zuleitung (16) des Hauswasserversorgungsnetz (3),
    - wobei das erste Kommunikationsmodul (6) der Hausautomationssteuerung (2) eingerichtet ist zum Aussenden eines Ventilansteuersignals an das Kommunikationsmodul (22) der Eingangs-

wassermesseinrichtung (20) über das Haus-kommunikationsnetz (92) bei Detektion einer Störung des Hauswasserversorgungsnetz (3), und

- wobei das Ventilsteuermodul (26) bei einem Empfang des Ventilansteuersignals das Ventil (18) entsprechend dem empfangenen Ventilansteuersignal ansteuert, insbesondere eine Schließung des Ventils (18) bewirkt.

3. System (100) nach Anspruch 1 oder 2, **dadurch gekennzeichnet, dass**

- das Verarbeitungsmodul (4) der Hausautomationssteuerung (2) eingerichtet ist zum Detektieren der Störung des Hauswasserversorgungsnetz (3) durch ein Vergleichen der augenblicklich in das Hauswasserversorgungsnetz (3) eingespeisten Wassermenge und der durch sämtliche Wasserauslässe augenblicklich entnommenen Wassermenge,
- wobei insbesondere eine Störung des Hauswasserversorgungsnetzes (3) detektiert wird, wenn durch das Vergleichen eine Differenz bestimmt wird, die größer ist als ein vorgegebener Grenzwert.

4. System (100) nach einem der vorherigen Ansprüche, **dadurch gekennzeichnet, dass**

- das Verarbeitungsmodul (4) der Hausautomationssteuerung (2) eingerichtet ist zum Bestimmen einer Störungsposition der detektierten Störung des Hauswasserversorgungsnetz (3) in dem Hauswasserversorgungsnetz (3), indem der jeweilige augenblickliche Wasserdruckabfall an den Wasserauslässen, an denen augenblicklich keine Wassermenge entnommen wird, ausgewertet wird.

5. System (100) nach Anspruch 4, **dadurch gekennzeichnet, dass**

- das Verarbeitungsmodul (4) eingerichtet ist zum Auswerten der jeweiligen Wasserdruckabfälle, indem zumindest der Wasserauslass (28, 34) bestimmt wird, an dem der maximale Wasserdruckabfall erfasst wird, und
- das Verarbeitungsmodul (4) eingerichtet ist zum Bewirken eines Ausgebens der Störungsposition in dem Hauswasserversorgungsnetz (3), basierend auf dem bestimmten Wasserauslass (28, 34).

6. System (100) nach einem der vorherigen Ansprüche, **dadurch gekennzeichnet, dass**

- das System (100) mindestens einen weiteren Hausautomationssensor (66, 72) umfasst, eingerichtet zum Detektieren einer Anwesenheit eines Nutzers in dem Gebäude (1), und
- das Verarbeitungsmodul (4) der Hausautomationssteuerung (2) zumindest eingerichtet ist zum Detektieren der Störung des Hauswasserversorgungsnetz (3) durch Auswerten der empfangenen eingespeisten Wassermenge, der empfangenen entnommenen Wassermengen, der erfassten Wasserdrücke und der von dem mindestens einen Hausautomationssensor (66, 72) bereitgestellten Anwesenheitsinformation.

7. System (100) nach Anspruch 6, **dadurch gekennzeichnet, dass**

- der mindestens eine Hausautomationssensor (66, 72) ein Bewegungssensor (72) ist, und/oder
- der mindestens eine Hausautomationssensor (66, 72) ein Tür- und/oder Fensterzustandserfassungssensor (66) ist.

8. System (100) nach einem der vorherigen Ansprüche, **dadurch gekennzeichnet, dass**

- die Hausautomationssteuerung (2) ein Mustererkennungsmodul (10) umfasst, eingerichtet zum Erkennen eines zeitlichen und regelmäßig auftretenden Wasserverbrauchsprofils zumindest aus der empfangenen entnommenen Wassermenge mindestens eines bestimmten Wasserauslasses (28, 34), und
- das erste Kommunikationsmodul (6) der Hausautomationssteuerung (2) eingerichtet ist zum Ansteuern mindestens eines Aktors (60, 78), basierend auf dem erkannten Wasserverbrauchsprofil.

9. System (100) nach Anspruch 8, **dadurch gekennzeichnet, dass**

- das erste Kommunikationsmodul (6) der Hausautomationssteuerung (2) eingerichtet ist zum Ansteuern eines Heizungsventil (56, 58) eines Heizkörpers (52, 54) des Systems (100) zu einem bestimmten Zeitpunkt, basierend auf dem erkannten Wasserverbrauchsprofil, und/oder
- das erste Kommunikationsmodul (6) der Hausautomationssteuerung (2) eingerichtet ist zum Ansteuern einer Warmwasseraufbereitungsanlage (78) des Systems (100) zu einem bestimmten Zeitpunkt, basierend auf dem erkannten Wasserverbrauchsprofil.

10. Verfahren zum Betreiben eines Hausautomationssystems (100) mit einem Hauswasserversorgungsnetz (3), insbesondere eines Hausautomationssystems (100) nach einem der vorherigen Ansprüche, das Verfahren umfassend:

- Messen, durch mindestens ein Messmodul (24) einer Eingangswassermesseinrichtung (20), der in das Hauswasserversorgungsnetz (3) eingespeisten Wassermenge,
- Übertragen, durch mindestens ein Kommunikationsmodul (22) der Eingangswassermesseinrichtung (20), der gemessenen eingespeisten Wassermenge über ein Hauskommunikationsnetz (3) an ein erstes Kommunikationsmodul (6) einer Hausautomationssteuerung (2),
- jeweiliges Messen, durch jeweils mindestens ein erstes Messmodul (44) einer jeweiligen Ausgangswassermesseinrichtung (40), die jeweils einem jeweilige Wasserauslass (28, 34) zugeordnet ist, der durch den jeweils zugeordneten Wasserauslass (28, 34) entnommenen Wassermenge,
- jeweiliges Messen, durch jeweils mindestens ein zweites Messmodul (46) der jeweiligen Ausgangswassermesseinrichtung (40), des Wasserdrucks an dem jeweils zugeordneten Wasserauslass (28, 34), und
- jeweiliges Übertragen, durch jeweils mindestens ein Kommunikationsmodul (42), der jeweils gemessenen entnommenen Wassermenge und des jeweils gemessenen Wasserdrucks über das Hauskommunikationsnetz (92) an das erste Kommunikationsmodul (6) der Hausautomationssteuerung (2),
- Detektieren, durch ein Verarbeitungsmodul (4) der Hausautomationssteuerung (2), zumindest einer Störung des Hauswasserversorgungsnetz (3) durch Auswerten zumindest der empfangenen eingespeisten Wassermenge, der empfangenen entnommenen Wassermengen und der erfassten Wasserdrücke, und
- Aussenden, durch ein zweites Kommunikationsmodul (8) der Hausautomationssteuerung (2) einer Push-Störungsnachricht über das Fernkommunikationsnetz (94) bei einer Detektion einer Störung des Hauswasserversorgungsnetzes (3).

Fig.1

EP 3 795 758 A1

Fig.2

Europäisches Patentamt
European Patent Office
Office européen des brevets

## EUROPÄISCHER RECHERCHENBERICHT

**Nummer der Anmeldung**

EP 20 18 9120

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2015 114558 A1 (AXA KONZERN AG [DE]; RWE AG [DE]) 2. März 2017 (2017-03-02) | 1,2,4-10 | INV. E03B7/00 G01M3/28 |
| Y | * Absatz [0042] - Absatz [0093]; Abbildungen * ----- | 3 | |
| Y | US 2018/275011 A1 (SAIDI ALI [US]) 27. September 2018 (2018-09-27) * Zusammenfassung; Abbildungen * ----- | 3 | |

**RECHERCHIERTE SACHGEBIETE (IPC)**

E03B
G01M

Der vorliegende Recherchenbericht wurde für alle Patentansprüche erstellt

| Recherchenort | Abschlußdatum der Recherche | Prüfer |
|---|---|---|
| Den Haag | 12. Januar 2021 | Amroun, Sébastien |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 20 18 9120

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-01-2021

| Im Recherchenbericht angeführtes Patentdokument | Datum der Veröffentlichung | Mitglied(er) der Patentfamilie | Datum der Veröffentlichung |
|---|---|---|---|
| DE 102015114558 A1 | 02-03-2017 | DE 102015114558 A1<br>EP 3345058 A1<br>WO 2017036913 A1 | 02-03-2017<br>11-07-2018<br>09-03-2017 |
| US 2018275011 A1 | 27-09-2018 | KEINE | |

EPO FORM P0461

Für nähere Einzelheiten zu diesem Anhang : siehe Amtsblatt des Europäischen Patentamts, Nr.12/82